# EUROPEAN PATENT APPLICATION

(11) **EP 2 485 003 A1**
(43) Date of publication of application: **08.08.2012**
(21) Application number: 12153795.5
(22) Date of filing: 03.02.2012
(51) Int. Cl.: F28D 7/06, F28F 19/00

(54) **Heat exchanger in which acoustic waves are used to counteract growth of organisms**

(30) Priority: 07.02.2011 NL 2006151
(71) Applicant: GEA Bloksma B.V., 1332 AB Almere (NL)
(72) Inventor: van Soest, Petrus Carolus Johannes, 1351 HC Almere (NL); Soemotinojo, Roy Semoél, 8231 ET Lelystad (NL); van Leeuwen, Peter, 1333 ZS Almere (NL)
(74) Representative: Klavers, Cornelis

(57) **Abstract**

A description is given of a heat exchanger (1) or cooler for vessels, which is provided with a supply and a drain (3,4) which are connected to a tube system (5) for giving off heat from the water flowing inside said tube system (5) to outboard water. Said tube system (5) comprises parallel tubes (6) extending in the longitudinal direction in the housing, between which tubes (6), in the plane perpendicular to the center of the heat exchanger (1), a space (7) extends over said longitudinal direction. The heat exchanger (1) further comprises members (8) which are provided in said space (7) and which produce ultrasonic waves, said members (8) having an elongated shape such that they extend over said space (7). By virtue thereof, an effective anti - fouling system is obtained in the compact cooler.

## Description

The present invention relates to a heat exchanger for vessels, which heat exchanger is provided with a supply and a drain which are connected to a tube system extending inside said heat exchanger and which serves for exchanging heat between water flowing inside said tube system and outboard water, which tube system comprises parallel tubes extending in the longitudinal direction, between which tubes a space extends, over said longitudinal direction, in the plane perpendicular to the center of the heat exchanger.

The present invention further relates to a method of counteracting growth of organisms.

Such a heat exchanger or cooler, and such a method, are well known. In particular, it is known to manufacture the tubes or ducts of a tube system in the heat exchanger from a copper alloy, wherein copper is electrochemically extracted from anodes of that system by the application of an anti - fouling system. By virtue thereof, organisms, particularly micro - organisms as present in seawater, are practically prevented from depositing on the outside of the copper tubes.

This known method, however, causes the outgoing water to be contaminated with copper, and requires a substantial amount of permanently available electric power in order to be continuously operational for the prevention of said growth of organisms. In addition, the copper tubes which are gradually increasingly affected by electrochemical attack, causing thinning of the tubes, must be replaced in the course of time. This is a time-consuming job which, in view of the length of the period of time involved, leads to substantial costs and loss of income owing to the unavailability for service of the vessel in question.

It is an object of the present invention to provide an improved heat exchanger for vessels as well as an improved method, which are both reliable and lead to shorter maintenance and standstill periods, and which require a minimum of adaptations and space for both the heat exchanger itself and the installation in situ thereof.

To achieve this, the heat exchanger according to the invention has the characteristics according to claim 1, and the corresponding method has the characteristics according to claim 9.

An advantage of the heat exchanger according to the invention is that the shape of the elongated, ultrasonic wave - producing member or members, hereinafter also referred to as acoustic converter or transductor, makes said member or members optimally equipped to provide for a broad acoustic power transfer to the incoming outboard water. Depending on the circumstances, said converters are capable of providing for a broad spread and transmission of acoustic waves along and between the tubes in the heat exchanger or cooler, if necessary over the full length of the tubes and the corresponding space.

An embodiment of the heat exchanger according to the invention is **characterized in that** the tubes are arranged such that they enclose the above-mentioned space, which is the case, in particular, in a further refined embodiment in which the tubes are U - shaped and the space in which said members are provided is contained within said shape, and enclosed, as it were, by said shape. In combination with the above, a preferred embodiment of the heat exchanger according to the invention is obtained, in which also the members producing ultrasonic waves, such as the electro - acoustic or piezo - electric converter members, comprise electric connections which are situated on the same upper side of the heat exchanger. As a result, both the electric and the thermal "connections", are advantageously situated on the same, readily accessible, side of the heat exchanger.

Possible embodiments which are to be further elucidated and which are set forth in the remaining claims are given in the description herein below together with the associated advantages.

The heat exchanger and the corresponding method according to the present invention will now be explained in greater detail with reference to the figures below in which corresponding parts are provided with the same reference numerals. In the figures:
Figure 1 shows an exploded view of the interior of a preferred embodiment of a heat exchanger according to the invention; and
Figure 2 shows a right - side cross - sectional view at the location of an ultrasonic converter provided in the heat exchanger of figure 1.

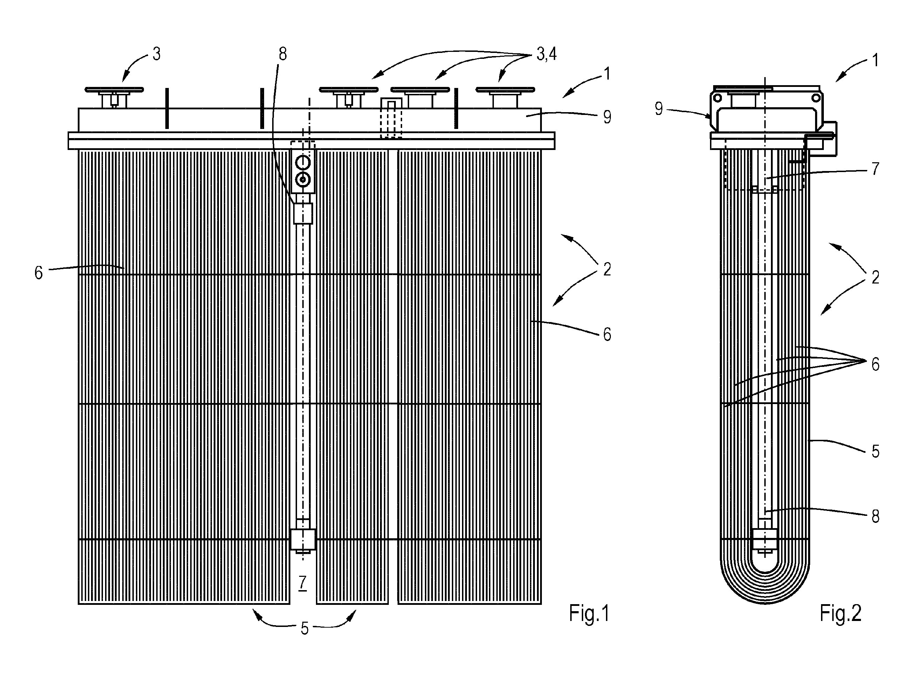

Figures 1 and 2 each show views of the interior of a cooler or heat exchanger 1, wherein, for clarity, only the position of the omitted housing 2 is indicated. Such heat exchangers 1 are used on board of vessels, such as ships. Heat exchanger 1 is provided with lead - throughs, that is to say supplies and drains 3, 4, which are connected to a tube system 5 present in the housing, which tube system is used for a liquid medium which must generally be cooled, here cooling water, which cooling water, in this case, is distributed over power - consuming apparatus at various locations in the ship, and is then led back to the cooler 1. In the cooler 1, heat exchange takes place between seawater and the cooling water.

For this purpose, as shown in Figure 1, the tube system 5 comprises parallel tubes 6 extending in the longitudinal direction through the heat exchanger 1, between which tubes there is a space 7 shown in figures 1 and 2. Said space 7, which is embedded between the tubes 6, is situated in the plane perpendicular to the center of the heat exchanger 1 and is elongated in shape, and said space preferably extends substantially throughout the length of the tubes 6. The heat exchanger 1 is provided with members 8 accommodated in the space 7, which are preferably elongated as well and which produce ultrasonic waves. In this way, the shape of the space 7 and the shape of the members 8 are well matched. As a result, a compact heat exchanger is achieved and the transfer of acoustic power from the members 8 to the, generally, cooling medium or seawater takes place in an effective manner and preferably substantially throughout the length of the elongated members 8.

The members 8 producing ultrasonic waves are also known as electro - acoustic or piezo - electric converters or converters; in this case, however, they have an elongated, tubular or cylindrical shape specially adapted to the shape of the space, and a length of, for example, 1 to generally maximally 2 meters. It may be required that space is cleared between the tubes 6 to accommodate the acoustic converter 8 or the elongated pack of individual converters 8 in said space in order that the tubes 6 can be arranged such that they envelop or enclose, as it were, the above-mentioned space.

In the embodiment shown in the jointly depicted figures 1 and 2, the heat exchanger 1 is provided with a plate 9, here only on the upper side, on which plate, the respective supplies 3 and drains 4 for the media are provided. In the embodiment comprising U shaped tubes 6, which are preferably vertically arranged, said tubes also end in the plate 9, in which the relevant current distribution takes place. The electric connections 10 also end in said plate, so that all necessary connections, for the two water streams as well as for the required electric power, are situated on the same upper side.

The electrical driving of the ultrasonic members 8 accommodated in the heat exchanger 1 preferably takes place in an intermittent manner, because this requires less electric power and the antifouling effectiveness is not adversely affected. That is to say that the members 8 are active only during a certain time interval in which they are supplied with electric power. This time interval can preferably be set, so that the expected degree of, generally, biological growth of organisms and micro - organisms on the outside surface of the tubes 6, the plate 9 and the inner side of the housing 2 can be taken into account. The acoustic members 8 are operated at a frequency and at an acoustic power which are set such that, within the given construction and geometry of the exchanger 1, a maximum of acoustic power is transferred to the water in the heat exchanger 1. The acoustic power of the members 8 may lie in the range between 2 and 4 kW and may in particular be approximately 3 kW in order to be still effective. The frequency of the ultrasonic waves must be smaller than approximately 50 KHz, in particular smaller than 40 KHz and most particularly lies in the range between 20 and 40 KHz. This specifically selected frequency range results from the fact that the wavelength must be sufficiently long in relation to any bubbles or contaminating particles in the seawater, so that the acoustic waves can propagate around these rather than being lost in or swallowed by said bubbles or contaminating particles.

If necessary, the outside surface of the tubes 6 and/or the inner wall of the housing 2 are provided with an antifouling and/or acoustic wave - reflecting layer.

## Claims

1. A heat exchanger for vessels, which is provided with a supply and a drain which are connected to a tube system extending inside said heat exchanger for exchanging heat between water flowing inside said tube system and outboard water, which tube system comprises tubes extending parallel to one another in the longitudinal direction, between which, in the perpendicular bisector plane of the heat exchanger, a space extends over said longitudinal direction, **characterized in that** the heat exchanger comprises members which produce ultrasonic waves and which are provided in said space, said members having an elongated shape such that they extend over said space.

2. The heat exchanger according to claim 1, **characterized in that** the tubes are arranged such that they enclose the aforementioned space.

3. The heat exchanger according to claim 1 or 2, **characterized in that** the tubes are U - shaped and the space in which the aforementioned members are accommodated is contained within said shape.

4. The heat exchanger according to any one of claims 1 to 3, **characterized in that** the above - mentioned supply and drain are situated on the so -termed upper side of the heat exchanger, and that the members which produce the ultrasonic waves are electro - acoustic or piezo - electric converter members whose electric connections are situated on the upper side.

5. The heat exchanger according to any one of claims 1 to 4, **characterized in that** the members which produce ultrasonic waves are tube - shaped.

6. The heat exchanger according to any one of claims 1 to 5, **characterized in that** the members which produce ultrasonic waves are accommodated in one and the same cylinder in said space.

7. The heat exchanger according to claim 5 to 6, **characterized in that** the ultrasonic wave - producing members provided in the heat exchanger are driven intermittently, and, in particular, are in operation only for a period of time which can be set.

8. The heat exchanger according to any one of claims 1 to 7, **characterized in that** the outside surface of the tubes and / or the inner wall of a housing, if any, of the heat exchanger are provided with an anti-fouling and / or acoustic wave - reflecting layer.

9. A method wherein the growth of organisms is counteracted by the generation, in a heat exchanger, of ultrasonic waves in a space situated between parallel tubes extending in the longitudinal direction in which water flows that is to be cooled for vessels and along which tubes outboard water flows, which space extends over the perpendicular bisector plane of the housing and over said longitudinal direction, and wherein the members producing ultrasonic waves have an elongated shape such that they are situated substantially entirely in said space.

10. The method according to claim 9, **characterized in that** the said members are operated at a frequency and an acoustic power which are set such that within the given construction and geometry of the heat exchanger, a maximum acoustic power transfer to the water in the heat exchanger takes place as well as propagation of said acoustic power in said water, particularly towards the outside surface of the various tubes and / or the inner wall of the housing of the heat exchanger.

11. The method according to claim 9 or 10, **characterized in that** the acoustic power of said members is in the range of 2 to 4 KW, in particular approximately 3 KW.

12. The method according to any one of claims 9 to 11, **characterized in that** the frequency of the ultrasonic waves is lower than approximately 50 KHz, in particular lower than 40 KHz, and most particularly lies in the range of 20 to 40 KHz.
